(19) Europäisches Patentamt / European Patent Office / Office européen des brevets

(11) EP 3 237 465 B1

(12) **EUROPÄISCHE PATENTSCHRIFT**

(45) Veröffentlichungstag und Bekanntmachung des Hinweises auf die Patenterteilung:
**11.11.2020 Patentblatt 2020/46**

(21) Anmeldenummer: **15821072.4**

(22) Anmeldetag: **21.12.2015**

(51) Int Cl.:
***C08F 8/30*** (2006.01) ***B01J 41/12*** (2017.01)
***B01J 45/00*** (2006.01) ***C08F 8/12*** (2006.01)
*C08F 212/08* (2006.01) *C08F 212/36* (2006.01)

(86) Internationale Anmeldenummer:
**PCT/EP2015/080833**

(87) Internationale Veröffentlichungsnummer:
**WO 2016/102491 (30.06.2016 Gazette 2016/26)**

(54) **VERFAHREN ZUR HERSTELLUNG VON AMINOMETHYLIERTEN PERLPOLYMERISATEN**

METHOD FOR THE PRODUCTION OF AMINOMETHYLATED BEAD POLYMERS

PROCÉDÉ DE FABRICATION DE POLYMÈRES EN PERLES AMINOMÉTHYLÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2014 EP 14199644**

(43) Veröffentlichungstag der Anmeldung:
**01.11.2017 Patentblatt 2017/44**

(73) Patentinhaber: **Lanxess Deutschland GmbH**
**50569 Köln (DE)**

(72) Erfinder:
- **KLIPPER, Reinhold**
  **50933 Köln (DE)**
- **VANHOORNE, Pierre**
  **40789 Monheim (DE)**
- **REZKALLAH, Areski**
  **51427 Bergisch Gladbach (DE)**
- **KOOP, Bernd**
  **50668 Köln (DE)**

(56) Entgegenhaltungen:
**EP-A2- 1 078 688 US-A- 3 989 650**
**US-A- 4 952 608**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Herstellung von aminomethylierten Perlpolymerisaten unter Verwendung von kondensierten Formaldehyden und Carbonsäureanhydriden.

Ein Verfahren zur Herstellung von aminomethylierten Perlpolymerisaten ist aus der US-A 4232125 und der PCT/EP2014/067109 bekannt, bei dem Pthhalimid und Paraformaldehyd und das Perlpolymerisat, ebenfalls in Gegenwart von 1,2-Dichlorethan als Quellungsmittels, zusammen mit Schwefelsäure als Friedel-Crafts Katalysator in einer Eintopfreaktion, bei der als Intermediat das Carboniumion des Methylphthalimids gebildet wird, zum pthalimidomethylierten Perlpolymerisat umgesetzt wird. Das phthalimidomethylierte Perlpolymerisate wird dann alkalisch zum aminomethylierten Perlpolymerisat hydrolysiert.

Aus der US 3989650 ist ein Verfahren zur Herstellung von aminomethylierten Perlpolymerisaten bekannt, bei dem N-Hydroxyalkylimide oder N-Hydroxyalkylamide mit aliphatischen Carbonsäuren und Carbonsäurenanhydriden zu deren Estern umgesetzt werden und dann das Perlpolymerisat in Gegenwart eines Quellungsmittels und eines Friedel-Crafts Katalysators amidomethyliert wird. N-Hydroxyalkylimide werden üblicherweise durch Umsetzung von z.B. Phthalimid mit Formaldehyd hergestellt und dann isoliert. Das amidomethylierte Perlpolymerisate wird dann alkalisch zum aminomethylierten Perlpolymerisat hydrolysiert.

Aus der EP-A 1078688 ist ein Verfahren bekannt, bei dem zunächst N-Acetoxymethylphthalimid aus Formaldehyd und Phthalimid hergestellt wird und dann das gewonnen Zwischenprodukt, in Gegenwart eines Quellungsmittel, mit dem Perlpolymerisat umgesetzt wird. Eine Umsetzung des Perlpolymerisates in einer Eintopfreaktion mit Paraformaldehyd und ohne den Zusatz von Quellungsmitteln wird nicht beschrieben. Auch aus der US-A 4952608 ist ein Verfahren zur Herstellung von amidomethylierten Perlpolymerisaten bekannt, bei denen N-Acetoxymethylphthalimid mit dem Perlpolymerisat umgesetzt wird.

Nachteilig an den vorgenannten Verfahren ist, dass die Verfahren technisch und ökonomisch nicht effizient genug durchgeführt werden können.

Es bestand daher ein Bedürfnis nach einem Verfahren zur Herstellung von aminomethylierten Perlpolymerisate mit dem die Nachteile des Standes der Technik überwunden werden können.

Überraschend wurde gefunden, dass in Gegenwart von aliphatischen, gesättigten oder ungesättigten Carbonsäureanhydriden oder in Gegenwart von Gemischen dieser Carbonsäureanhydride und einer aliphatischen, gesättigten oder ungesättigten Carbonsäure, aminomethylierte Perlpolymerisate in hohen Ausbeuten hergestellt werden können. Dabei kann weitestgehend auf den Einsatz chlorierter, organischer Lösungsmittel verzichtet werden. Gegenstand der Erfindung ist daher ein Verfahren zur Herstellung von aminomethylierten Perlpolymerisaten, dadurch gekennzeichnet, dass

a) Monomertröpfchen aus einem Gemisch enthaltend mindestens eine monovinylaromatische Verbindung, mindestens eine polyvinylaromatische Verbindung, mindestens einen Initiator zu einem Perlpolymerisat umgesetzt werden und

b) das Perlpolymerisat aus Schritt a) mit Verbindungen der Formel (I) oder deren Salze

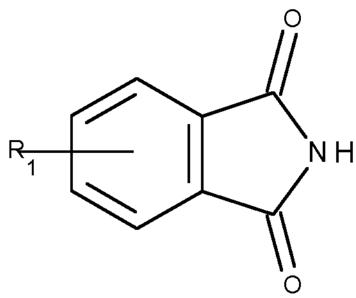

(I)

wobei $R_1 = C_1$-$C_3$-Alkyl oder H bedeutet und Verbindungen der Formel (II)

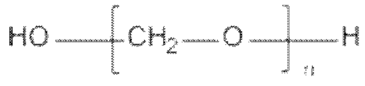

(II)

wobei n = 2 bis 100 ist,
in Gegenwart von aliphatischen, gesättigten oder ungesättigten Carbonsäureanhydriden oder in Gegenwart von

Gemischen von aliphatischen, gesättigten oder ungesättigten Carbonsäureanhydride und zumindest einer aliphatischen, gesättigten oder ungesättigten Carbonsäure und
in Gegenwart von zumindest einem Friedel-Crafts Katalysator
zu einem phthalimidomethyliertem Perlpolymerisat umgesetzt wird und die Menge der eingesetzten Verbindungen der Formel (I) und der Verbindungen der Formel (II), des Perlpolymerisates, der aliphatischen, gesättigten oder ungesättigten Carbonsäureanhydriden, Friedel-Crafts Katalysatoren und gegebenenfalls Carbonsäuren zusammen in der Reaktionsmischung größer sind als 80 Gew.-% bezogen auf die Gesamtmenge der Reaktionsmischung und

c) das pthalimidomethylierte Perlpolymerisat zu einem aminomethylierten Perlpolymerisat hydrolysiert wird.

$R_1$ stellt bevorzugt H dar. Falls $R_1$ = H ist, dann ist die Verbindung der Formel (I) Phthalimid. Verbindungen der Formel (I) sind bevorzugt Phthalimid und dessen Salze oder Säureadditionsverbindungen. Als Säureadditionsverbindungen können z.B. die Addukte mit Salzsäure oder Schwefelsäure verstanden werden. Bevorzugt stellen die Salze der Verbindungen der Formel (I) quartäre Phthalimidadukte aus Phthalimid und Schwefelsäure dar.
Bevorzugt ist n = 2 bis 30. Besonders bevorzugt ist n = 8 bis 30.
Die Verbindungen der Formel (II) können linear sein oder aber auch zyklische Kondensate des Formaldehyds, also z.B. auch Trioxan darstellen. Bevorzugt werden als Verbindungen der Formel (II) Paraformaldehyd oder Trioxan oder Gemische dieser Verbindungen eingesetzt. Besonders bevorzugt sind die Verbindungen der Formel (II) Paraformaldehyd.
Als Carbonsäurenanhydride können in Verfahrensschritt b) z.B. und vorzugsweise aliphatische, gesättigte oder ungesättigte Mono- , Di- oder Tricarbonsäureanhydride, die bei Temperaturen zwischen 10 °C und 60 °C flüssig sind, wie z.B. Bernsteinsäureanhydrid, Oxalsäureanhydrid, Adipinsäureanhydrid, Maleinsäureanhydrid, Essigsäuresäureanhydrid, Buttersäureanhydrid, Propionsäureanhydrid, Hexansäureanhydrid oder Pentansäureanhydrid und deren Isomere, wie z.B. Valeriansäureanhydrid, Isovaleriansäureanhydrid, 2-Methylbuttersäureanhydrid oder Pivalinsäureanhydrid eingesetzt werden. Besonders bevorzugt werden in Verfahrensschritt b) als Carbonsäureanhydride aliphatische und gesättigte Monocarbonsäureanhydride eingesetzt, die bei Temperaturen zwischen 10 °C und 60 °C flüssig sind. Ganz besonders bevorzugt werden Essigsäureanhydrid oder Pentansäureanhydrid und deren Isomere Valeriansäureanhydrid, Isovaleriansäureanhydrid, 2-Methylbuttersäureanhydrid oder Pivalinsäureanhydrid eingesetzt. Noch weiter bevorzugt wird Essigsäureanhydrid eingesetzt.
Als Carbonsäuren können in Verfahrensschritt b) z.B. und vorzugsweise flüssige, gesättigte oder ungesättigte Mono-, Di- oder Tricarbonsäuren, die bei Temperaturen zwischen 10 °C und 60 °C flüssig sind, wie z.B. Bernsteinsäure, Oxalsäure, Adipinsäure, Ameisensäure, Diglykolsäure, Maleinsäure, Essigsäure, Buttersäure, Propansäure, Hexansäure oder Heptansäure eingesetzt werden. Bevorzugt werden die Carbonsäureanhydride und die korrespondierende Carbonsäuren in Gemischen eingesetzt, d.h. z.B. Valeriansäureanhydrid mit Valeriansäure oder Essigsäureanhydrid mit Essigsäure. Besonders bevorzugt werden als Carbonsäuren in Verfahrensschritt b) aliphatische und gesättigte Monocarbonsäuren eingesetzt, die bei Temperaturen zwischen 10 °C und 60 °C flüssig sind. Ganz besonders bevorzugt wird Essigsäureanhydrid mit Essigsäure als Gemisch eingesetzt. Falls Gemische aus Carbonsäureanhydrid und Carbonsäure eingesetzt werden, liegt das Mengenverhältnis Carbonsäureanhydrid zu Carbonsäure im Allgemeinen zwischen 100 : 1 bis 1 : 100. Bevorzugt liegt das Mengenverhältnis zwischen Carbonsäureanhydrid zu Carbonsäure zwischen 100 : 1 bis 1 : 1. Besonders bevorzugt liegt das Mengenverhältnis zwischen Carbonsäureanhydrid zu Carbonsäure zwischen 10:1 und 1 : 10. Noch weiter bevorzugt liegt das Mengenverhältnis zwischen Carbonsäureanhydrid zu Carbonsäure zwischen 10:1 und 3:1.
Als Friedel-Crafts Katalysator können in Verfahrensschritt b) vorzugsweise starke anorganische oder organische Protonen¬säuren oder Lewis-Säuren wie z.B. Zinkchlorid, Aluminiumchlorid, Zinntetrachlorid, Eisen(III)chlorid oder weitere Eisen(III)salze oder Gemische dieser Verbindungen eingesetzt werden. Als Friedel-Crafts Katalysator werden beispielsweise und vorzugsweise aliphatische oder aromatische Methan-, Benzol,- und Toluolsulfonsäuren, Salzsäure, Schwefelsäure, Oleum, Salpetersäure oder Phosphorsäure oder Gemische dieser Säuren eingesetzt. Als organische Protonensäuren können z.B. aliphatische oder aromatische Methan-, Benzol,- und Toluolsulfonsäuren oder Fluorsulfonsäure eingesetzt werden. Bevorzugt werden als Friedel-Crafts Katalysatoren Schwefelsäure, Oleum und Eisen(III)salze oder Gemische dieser Verbindungen eingesetzt. Besonders bevorzugt wird als Friedel-Crafts Katalysator Schwefelsäure und Eisen(III)chlorid und Gemische dieser Verbindungen eingesetzt.
Bevorzugt werden die Eisen(III)salze zu der Schwefelsäure in einem Molverhältnis von 10:1 bis 1:10, besonders bevorzugt von 1 : 15 bis 1 : 4, eingesetzt. Ganz besonders bevorzugt wird das Eisen(III)chlorid zu der Schwefelsäure in einem Molverhältnis von 1 : 9 bis 1 : 5 eingesetzt.
Der Rahmen der Erfindung umfasst alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Kombination.
In Verfahrensschritt a) wird wenigstens eine monovinylaromatische Verbindung und wenigstens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen.

Als monovinylaromatische Verbindungen im Sinne der vorliegenden Erfindung werden in Verfahrensschritt a) bevorzugt Styrol, Vinyltoluol, Ethylstyrol, $\alpha$-Methylstyrol, Chlorstyrol, oder Chlormethylstyrol eingesetzt.

Insbesondere bevorzugt wird Styrol oder Mischungen aus Styrol mit den vorgenannten Monomeren, bevorzugt mit Ethylstyrol, eingesetzt.

Bevorzugte polyvinylaromatische Verbindungen im Sinne der vorliegenden Erfindung sind für Verfahrensschritt a) Divinylbenzol, Divinyltoluol, Trivinylbenzol, Divinylnaphtalin, oder Trivinylnaphtalin, insbesondere bevorzugt Divinylbenzol.

Die polyvinylaromatischen Verbindungen werden bevorzugt in Mengen von 1-20 Gew.-%, besonders bevorzugt 2-12 Gew.-%, insbesondere bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des Perlpolymerisats ausgewählt. Im Falle des Einsatzes von Divinylbenzol sind kommerzielle Divinylbenzolqualitäten, die neben den Isomeren des Divinylbenzols auch Ethylvinylbenzol enthalten, ausreichend.

Der Begriff Perlpolymerisat stellt im Sinne der Erfindung ein kugelförmiges, vernetztes Polymerisat dar.

Die Begriffe mikroporös oder gelförmig bzw. makroporös sind in der Fachliteratur bereits eingehend beschrieben worden.

Die Ausbildung makroporöser Perlpolymerisate erfolgt vorzugsweise durch Zusatz von Inertmaterialien, bevorzugt wenigstens einem Porogens, zu der Monomermischung bei der Polymerisation, um im Perlpolymerisat eine makroporöse Struktur zu erzeugen. Insbesonders bevorzugte Porogene sind Hexan, Octan, Isooctan, Isododecan, Methylethylketon, Butanol oder Octanol und deren Isomeren. Es sind vor allem organische Substanzen geeignet, die sich im Monomeren lösen, das Perlpolymerisat aber schlecht lösen bzw. quellen (Fällmittel für Polymere) beispielsweise aliphatische Kohlenwasserstoffe (Farbenfabriken Bayer DBP 1045102 , 1957; DBP 1113570, 1957).

In US 4382124 werden als Porogen die ebenfalls im Rahmen der vorliegenden Erfindung bevorzugt einzusetzende Alkohole mit 4 bis 10 Kohlenstoffatomen zur Herstellung monodisperser, makroporöser Perlpolymerisate auf Styrol/Divinylbenzol-Basis eingesetzt. Ferner wird eine Übersicht der Herstellmethoden makroporöser Perlpolymerisate gegeben.

Bevorzugt wird in Verfahrensschritt a) mindestens ein Porogen zugesetzt. Bevorzugt weisen die aminomethylierten Perlpolymerisate eine makroporöse Struktur auf.

Die gemäß Verfahrensschritt a) hergestellten Perlpolymerisate können in heterodisperser oder monodisperser Form hergestellt werden.

Die Herstellung heterodisperser Perlpolymerisate geschieht nach allgemeinen, dem Fachmann bekannten Verfahren, z.B. mit Hilfe der Suspensionspolymerisation.

Bevorzugt werden monodisperse Perlpolymerisate in Verfahrensschritt a) hergestellt.

Als monodispers werden in der vorliegenden Anmeldung solche Stoffe bezeichnet, bei dem mindestens 90 Volumen- oder Massen-% der Teilchen einen Durchmesser besitzen, der in dem Intervall mit der Breite von + 10 % des häufigsten Durchmessers um den häufigsten Durchmesser herum liegt.

Zum Beispiel bei einem Stoff mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

In einer bevorzugten Ausführungsform der vorliegenden Erfindung kommen in Verfahrensschritt a) mikroverkapselte Monomertröpfchen bei der Herstellung von monodispersen Perlpolymerisaten zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane oder Polyharnstoffe.

Als natürliches Polyamid wird bevorzugt Gelatine eingesetzt. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Bevorzugt ist die Phasengrenzflächenkondensation, bei der eine im Monomertröpfchen gelöste Reaktivkomponente (insbesondere ein Isocyanat oder ein Säurechlorid) mit einer zweiten, in der wässrigen Phase gelösten Reaktivkomponente (insbesondere einem Amin), zur Reaktion gebracht wird.

Die heterodispersen oder gegebenenfalls mikroverkapselten, monodispersen Monomertröpfchen enthalten wenigstens einen Initiator oder Mischungen von Initiatoren (Initiatorkombination) zur Auslösung der Polymerisation. Für

das erfindungsgemäße Verfahren bevorzugte Initiatoren sind Peroxyverbindungen, insbesondere bevorzugt Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethyl-hexanoylperoxy)-2,5-dimethylhexan oder tert.-Amylperoxy-2-etylhexan, sowie Azoverbindungen wie 2,2'-Azobis(isobutyronitril) oder 2,2'-Azobis(2-methylisobutyronitril).

Die Initiatoren werden bevorzugt in Mengen von 0,05 bis 2,5 Gew.-%, besonders bevorzugt 0,1 bis 1,5 Gew.-%, bezogen auf die Monomeren-Mischung, angewendet.

Das gegebenenfalls, monodisperse, mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Bei der Herstellung von monodispersen Perlpolymerisaten in Verfahrensschritt a) kann die wässrige Phase in einer weiteren bevorzugten Ausführungsform einen gelösten Polymerisationsinhibitor enthalten. Als Inhibitoren kommen in diesem Fall sowohl anorganische als auch organische Stoffe in Frage. Bevorzugte anorganische Inhibitoren sind Stickstoffverbindungen, insbesondere bevorzugt Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere bevorzugte organische Inhibitoren sind stickstoffhaltige Verbindungen. Insbesondere bevorzugt sind Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazino-diessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 - 1000 ppm (bezogen auf die wässrige Phase), vorzugsweise 10 - 500 ppm, besonders bevorzugt 10 - 250 ppm.

Die Polymerisation der gegebenenfalls mikroverkapselten monodispersen, Monomertröpfchen zum monodispersen Perlpolymerisat erfolgt, wie bereits oben erwähnt, gegebenenfalls bzw. bevorzugt in Anwesenheit eines oder mehrerer Schutzkolloide in der wässrigen Phase. Als Schutzkolloide eignen sich natürliche oder synthetische wasserlösliche Polymere, bevorzugt Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Bevorzugt sind ferner Cellulosederivate, insbesondere Celluloseester und Celluloseether, wie Carboxymethylcellulose Methylhydroxyethylcellulose, Methylhydroxypropylcellulose und Hydroxyethylcellulose. Insbesondere bevorzugt ist Gelatine. Die Einsatzmenge der Schutzkolloide beträgt im allgemeinen 0,05 bis 1 Gew.-% bezogen auf die wässrige Phase, vorzugsweise 0,05 bis 0,5 Gew.-%.

Die Polymerisation zum monodispersen Perlpolymerisat kann in einer alternativen bevorzugten Ausführungsform in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borat in der wässrigen Phase beträgt im Allgemeinen 0,5-500 mmol/l, insbesondere 2,5 - 100 mmol/l.

Die Rührgeschwindigkeit bei der Polymerisation zum monodispersen Perlpolymerisat ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt 1 : 0,75 bis 1 : 20, vorzugsweise 1 : 1 bis 1 : 6.

Die Polymerisationstemperatur zum monodispersen Perlpolymerisat richtet sich nach der Zerfallstemperatur des eingesetzten Initiators. Sie liegt im Allgemeinen zwischen 50 bis 180°C, vorzugsweise zwischen 55 und 130°C. Die Polymerisation dauert 0,5 bis etwa 20 Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das monodisperse Perlpolymerisat mit üblichen Methoden, beispielsweise durch Filtrieren oder Dekantieren, isoliert und gegebenenfalls gewaschen.

Die Herstellung der monodispersen Perlpolymerisate mit Hilfe des Jetting Prinzipes oder des Seed-Feed-Prinzip ist aus dem Stand der Technik bekannt und z.B. in US- A 4 444 961, EP-A 0 046 535, US 4 419 245 oder WO 93/12167 beschrieben.

Bevorzugt erfolgt die Herstellung der monodispersen Perlpolymerisate mit Hilfe des Jetting Prinzipes oder des

Seed-Feed-Prinzip.

Bevorzugt wird in Verfahrensschritt a) ein makroporöses, monodisperses Perlpolymerisat hergestellt.

Verfahrensschritt b) kann in unterschiedlicher Art und Weise durchgeführt werden. Das Perlpolymerisat könnte z.B. zunächst vorgelegt werden und dazu eine Mischung aus den Verbindungen der Formel (I) und den Verbindungen der Formel (II), den Carbonsäureanhdriden, gegebenenfalls vermischt mit den Carbonsäuren und den Friedel-Crafts-Katalysatoren gegeben werden. Genauso könnten aber auch zunächst die Carbonsäureanhydride, gegebenenfalls vermischt mit Carbonsäuren, vorgelegt werden und dann das Perlpolymerisat hinzugegeben werden und dann die Verbindungen der Formel (I) und danach die Friedel-Crafts-Katalysatoren hinzugefügt werden. Auch andere Zugabereihenfolgen sind denkbar. Bevorzugt werden zunächst die Carbonsäureanhydride vorgelegt, gegebenenfalls vermischt mit korrespondierenden Carbonsäuren, dann wird das Perlpolymerisat hinzugegeben. Danach werden vorzugsweise die Verbindungen der Formel (I) und die Verbindungen der (II) hinzudosiert. Danach wird vorzugsweise erwärmt und dann vorzugsweise die Friedels-Crafts-Katalysatoren hinzugefügt. Vorzugsweise wird die Temperatur der Mischung danach weiter erhöht. Die Aufarbeitung der Reaktionsmischung erfolgt nach dem Fachmann bekannten Verfahren. Vorzugsweise wird das phthalimidomethylierte Perlpolymerisat abfiltriert. Vorzugsweise erfolgt die Durchführung in einem Eintopfverfahren. Eine separate Herstellung intermediär entstehender Reaktionsprodukte ist im erfindungsgemäßen Verfahren nicht notwendig.

Die Menge an Friedel-Crafts Katalysator, die in Verfahrensschritt b) eingesetzt wird, beträgt im Allgemeinen 0,5 bis 20 mol pro Mol Verbindungen der Formel (I), kann aber auch kleiner oder größer sein. Bevorzugt werden 0,5 mol bis 5 mol Friedel-Crafts Katalysator pro Mol Verbindungen der Formel (I) eingesetzt. Besonders bevorzugt 1 bis 5 mol Friedel-Crafts Katalysator pro Mol Verbindungen der Formel (I) eingesetzt.

Die Menge an Carbonsäureanhydride, die in Verfahrensschritt b) eingesetzt wird, beträgt im Allgemeinen 1 bis 10 mol pro Mol Verbindungen der Formel (I), kann aber auch kleiner oder größer sein. Bevorzugt werden 1 bis 7 mol Carbonsäureanhydride pro Mol Verbindungen der Formel (I) eingesetzt. Besonders bevorzugt werden 1,0 bis 4 mol Carbonsäureanhydride pro Mol Verbindungen der Formel (I) eingesetzt. Ganz besonders bevorzugt werden 1,5 bis 4 mol Carbonsäureanhydride pro Mol Verbindungen der Formel (I) eingesetzt. Die Menge an Carbonsäureanhydride, die in Verfahrensschritt b) eingesetzt wird, beträgt im Allgemeinen $10^{-5}$ mol bis 0,06 mol pro Gramm Perlpolymerisat kann aber auch kleiner oder größer sein. Bevorzugt werden von 0,001 bis 0,05 mol Carbonsäureanhydrid pro Gramm Perlpolymerisat eingesetzt.

Die Verbindungen der Formel (I) werden im Allgemeinen in einer Menge von 0,01 bis 1,0 mol pro Gramm Verbindungen der Formel (II) in Verfahrensschritt b) eingesetzt. Die Menge kann aber auch kleiner oder größer sein. Bevorzugt werden die Verbindungen der Formel (I) in einer Menge von 0,01 bis 0,05 mol pro Gramm Verbindungen der Formel (II) in Verfahrensschritt b) eingesetzt.

Bevorzugt ist der Gehalt von Quellungsmitteln in Verfahrensschritt b) kleiner als 10 Gew.% bezogen auf die Gesamtmenge der eingesetzten Edukte, besonders bevorzugt ist der Gehalt an Quellungsmitteln kleiner als 5 Gew.% bezogen auf die Gesamtmenge der Edukte. Verfahrensschritt b) wird ganz besonders bevorzugt ohne Zusatz von Quellungsmittel durchgeführt. Als übliche Quellungsmittel gelten organische Lösungsmittel wie z.B. Dichlormethan, Dichlorethan, insbesondere 1,2-Dichlorethan, Tetrachlorethan, Dichlorpropan, Pentachlorpropan, Dimethylformamid, Sulfolane, Nitropropane oder Nitrobenzol.

Vorzugsweise liegt die Temperatur bei der Verfahrensschritt b) durchgeführt wird zwischen 50 °C und 125 °C.

Bevorzugt liegen die in Verfahrensschritt b) eingesetzten Verbindungen der Formel (I) und der Verbindungen der Formel (II), Perlpolymerisat, der aliphatischen, gesättigten oder ungesättigten Carbonsäureanhydriden, Carbonsäuren und Friedels-Craft Katalysatoren zusammen in einer Menge größer als 90 Gew.-% in der Reaktionsmischung bezogen auf die Gesamtmenge der Reaktionsmischung vor.

Bevorzugt liegen die in Verfahrensschritt b) eingesetzten Verbindungen der Formel (I) und der Verbindungen der Formel (II), Perlpolymerisat, aliphatischen, gesättigten oder ungesättigten Carbonsäureanhydriden, Carbonsäuren und Friedels-Craft Katalysatoren zusammen in einer Menge größer als 95 Gew.-% in der Reaktionsmischung bezogen auf die Gesamtmenge der Reaktionsmischung vor.

In Verfahrensschritt b) werden bevorzugt Carbonsäureanhydride eingesetzt. Demzufolge können in Verfahrensschritt b) auch Mischungen eingesetzt werden, die aus den Verbindungen der Formel (I), der Verbindungen der Formel (II), Perlpolymerisat, aliphatischen, gesättigten oder ungesättigten Carbonsäureanhydriden und Friedels-Craft Katalysatoren bestehen und ohne zusätzliche Zugabe von Carbonsäuren eingesetzt werden. In diesem Fall gilt ebenfalls, dass die Gesamtmenge der eingesetzten Verbindungen der Formel (I), der Verbindungen der Formel (II), Perlpolymerisat, aliphatischen, gesättigten oder ungesättigten Carbonsäureanhydriden und Friedels-Craft Katalysatoren vorzugsweise größer 80 Gew. % besonders bevorzugt größer 90 Gew. % und ganz besonders bevorzugt größer 95 Gew.% in der Reaktionsmischung bezogen auf die Gesamtmenge der Reaktionsmischung vorliegt.

In Verfahrensschritt c) erfolgt im Allgemeinen die Umsetzung des phthalimidomethylierten, Perlpolymerisates zu dem aminomethylierten Perlpolymerisat mit wässrigen oder alkoholischen Lösungen eines Alkalihydroxids, wie Natriumhydroxid oder Kaliumhydroxid. Zudem wird Verfahrensschritt c) im Allgemeinen bei Temperaturen zwischen 100°C

und 250°C kann aber auch bei höheren oder niedrigeren Temperaturen durchgeführt werden. Vorzugsweise wird Verfahrensschritt c) bei Temperaturen zwischen 120 °C und 190°C durchgeführt. Bevorzugt erfolgt die Umsetzung des phthalimidomethylierten, Perlpolymerisates zu dem aminomethylierten Perlpolymerisat in Verfahrensschritt c) mit Alkali- oder Erdalkalihydroxiden oder Gemischen dieser Verbindungen, besonders bevorzugt mit Alkalihydroxiden, wie insbesondere Natriumhydroxid. Bevorzugt verläuft die Umsetzung in Verfahrensschritt c) in Gegenwart einer wässrigen oder alkoholischen Lösung eines Alkalihydroxides. Die Konzentration der Natronlauge liegt im Bereich von 10 bis 50 Gew.-%, vorzugsweise 20 bis 40 Gew.-%. Das dabei entstehende aminomethylierte Perlpolymerisat wird bevorzugt mit vollentsalztem Wasser alkalifrei gewaschen, kann aber auch mit anderen wässrigen Lösungen oder nicht entsalztem Wasser behandelt werden.

Das aminomethylierte Perlpolymerisat kann als Anionenaustauscher verwendet werden oder zu Chelatharzen weiter umgesetzt werden.

Die Umsetzung der im Verfahrensschritt c) erhaltenen aminomethylierten, Perlpolymerisate zu Chelatharzen erfolgt nach gängigen, dem Fachmann bekannten Verfahren.

Z.B. kann die Herstellung von Iminodiessigsäuregruppen enthaltenen Chelatharze durch Umsetzung des aminomethylgruppenhaltigen Perlpolymerisat aus Verfahrensschritt c) in wässriger Suspension mit Chloressigsäure oder ihren Derivaten erfolgen. Ebenso ist es möglich die in Verfahrensschritt c) erhaltenen aminomethylierten Perlpolymerisate in schwefelsaurer Suspension mit Formalin in Kombination mit P-H aciden (nach modifizierter Mannich Reaktion) Verbindungen zu Chelatharzen mit Phosphonsäuregruppen umzusetzen.

Mit Hilfe des erfindungsgemäßen Verfahrens können aminomethylierte Perlpolymerisate unter hohen Ausbeuten, bezogen auf die Menge an eingeführten Aminomethylgruppen, hergestellt werden.

Die erfindungsgemäße hergestellten aminomethylierten Perlpolymerisate können als schwach basische Anionenaustauscher eingesetzt werden oder zu Cehaltharzen umgesetzt werden.

Zudem kann auf die Verwendung von toxischen, chlorierten, organischen Lösungsmitteln im erfindungsgemäßen Verfahren verzichtet werden.

**Bestimmung der Menge an basischen Aminomethylgruppen im aminomethylierten Perlpolymerisat**

100 ml des aminomethylierten Perlpolymerisates werden auf dem Stampfvolumeter eingerüttelt und anschließend mit voll entsalztem Wasser in eine Glassäule gespült. In 1 Stunde und 40 Minuten werden 1000 ml 2 Gew. % ige wässrige Natronlauge überfiltriert.

Anschließend wird voll entsalztes Wasser überfiltriert bis 100 ml Eluat mit Phenolphthalein versetzt einen Verbrauch von höchstens 0,05 ml haben. 50 ml des Harzes werden in einem Becherglas mit 50 ml voll entsalztes Wasser und 100 ml 1 N Salzsäure versetzt.

Die Suspension wird 30 Minuten gerührt und anschließend in eine Glassäule gefüllt. Die Flüssigkeit wird abgelassen. Es werden weiter 100 ml 1 N Salzsäure über das Harz in 20 Minuten filtriert. Anschließend werden 200 ml Methanol überfiltriert. Alle Eluate werden gesammelt und vereinigt und mit 1 N Natronlauge gegen Methylporange titriert.

Die Menge an Aminomethylgruppen in 1 Liter aminomethyliertem Perlpolymerisat errechnet sich nach folgender Formel :

$$(200\ V)*20 = \text{mol Aminomethylgruppen pro Liter aminomethyliertes Perlpolymerisat.}$$

**Beispiele**

**Beispiel 1**

1.1 Herstellung des heterodispersen, makroporösen Perlpolymerisates auf der Basis von Styrol, Divinylbenzol und Ethylstyrol

In einem 10 l Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g von mikroverkapselten Monomertröpfchen mit enger Teilchengrößenverteilung aus 3,1 Gew.-% Divinylbenzol und 0,6 Gew.-% Ethylstyrol (eingesetzt als handelsübliches Isomerengemisch aus Divinylbenzol und Ethylstyrol mit 80 % Divinylbenzol), 0,4 Gew.-% Dibenzoylperoxid, 58,6 Gew.-% Styrol und 37,5 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt. Der Ansatz wird unter Rühren durch Temperaturerhöhung nach einem

Temperaturprogramm bei 25°C beginnend und bei 95°C endend auspolymerisiert. Der Ansatz wird abgekühlt, über ein 32 μm-Sieb gewaschen und anschließend im Vakuum bei 80°C getrocknet. Man erhält 1893 g eines Perlpolymerisates.

1.2 Herstellung eines phthalimidomethylierten Perlpolymerisates mit Schwefelsäure als Friedel-Crafts Katalysator

Bei Raumtemperatur werden 717, 2 Gramm Essigsäureanhydrid vorgelegt. Dazu werden 225 Gramm Perlpolymerisat aus Beispiel 1.1 dosiert. Es wird 30 Minuten bei Raumtemperatur gerührt. Dann werden 516,3 Gramm Phthalimid und 119,2 Gramm Paraformaldehyd (Fa. INEOS Granuform 91 (n=8 bis 30)) dosiert. Es wird 30 Minuten bei Raumtemperatur gerührt. Man erwärmt auf 60 °C und dosiert dann in 2 Stunden 778,5 Gramm Schwefelsäure. Die Suspension wird dann auf 115°C erhitzt und weitere 10 Stunden bei dieser Temperatur gerührt. Es wird auf 80 °C abgekühlt und 1500 ml voll entsalztes Wasser dosiert. Es wird auf 95 °C erhitzt und weiter 2 Stunden gerührt . Der Ansatz wird abgekühlt auf ein Sieb gegeben. Das phthalimidomethylierte Perlpolymerisat wird mit voll entsalztem Wasser gewaschen.

Volumenausbeute : 1225 ml

Trockengewicht : 0,436 Gramm pro ml

Stickstoffgehalt : 5,05 Gew. % bezogen auf die Gesamtmenge des phthalimidomethylierten Perlpolymerisates

1.3 Herstellung eines aminomethylgruppen haltigen Perlpolymerisates durch Hydrolyse des phthalamidomethylierten Perlpolymerisates aus Versuch 1.2

757 Gramm voll entsalztes Wasser und 502 Gramm 50 Gew.-% ige wässrige Natronlauge werden bei Raumtemperatur vorgelegt. Dazu werden 1205 ml phthalimidomethyliertes Perlpolymerisat aus 1.2 dosiert. Die Suspension wird im Autoklav unter Rühren in 2 Stunden auf 180°C erhitzt und weitere 8 Stunden bei dieser Temperatur gerührt. Nach dem abkühlen wird die Suspension auf ein Sieb gegeben. Das aminomethylierte Perlpolymerisat wird mit voll entsalztem Wasser gewaschen .

Volumenausbeute : 940 ml

Trockengewicht: 0,27 Gramm pro ml

HCl - Zahl: 1,73 mol/ Liter Harz

Stickstoffgehalt : 8,01 Gew. % bezogen auf die Gesamtmenge des aminomethylierten Perlpolymerisates

1.4 Herstellung eines phthalimidomethylierten Perlpolymerisates mit Schwefelsäure und Eisen(III)chlorid als Friedel-Crafts Katalysator

Bei Raumtemperatur werden 478,1 Gramm Essigsäureanhydrid vorgelegt. Dazu werden 150 Gramm monodisperses Perlpolymerisat aus Bsp. 1.1 dosiert. Es wird 30 Minuten bei Raumtemperatur gerührt. Dann werden 344,2 Gramm Phthalimid und 79,5 Gramm Paraformaldehyd (Fa. INEOS Granuform 91 (n=8 bis 30)) dosiert. Es wird 60 Minuten bei Raumtemperatur gerührt. Man erwärmt auf 60 °C und dosiert 121,5 Gramm Eisen(III)chlorid. Es wird 30 Minuten nachgerührt. Dann werden in 2 Stunden 519 Gramm Schwefelsäure dosiert. Die Suspension wird dann auf 115°C erhitzt und weitere 10 Stunden bei dieser Temperatur gerührt. Es wird auf 80 °C abgekühlt und 1500 ml voll entsalztes Wasser dosiert. Es wird auf 95 °C erhitzt und weitere 2 Stunden gerührt. Der Ansatz wird abgekühlt auf ein Sieb gegeben. Das phthalimidomethylierte Perlpolymerisat wird mit voll entsalztem Wasser gewaschen .

Volumenausbeute : 940 ml

Trockengewicht : 0,4453 Gramm pro ml

Stickstoffgehalt : 5,3 Gew. % bezogen auf die Gesamtmenge des phthalimidomethylierten Perlpolymerisates

1.5 Herstellung eines aminomethylgruppenhaltigen Perlpolymerisates durch Hydrolyse des phthalamidomethylierten Perlpolymerisates aus Versuch 1.4

545 Gramm voll entsalztes Wasser und 433 Gramm 50 Gew. % ige wässrige Natronlauge werden bei Raumtemperatur vorgelegt. Dazu werden 920 ml phthalimidomethyliertes Perlpolymerisat aus Bsp. 1.4. dosiert. Die Suspension wird im Autoklav unter Rühren in 2 Stunden auf 180°C erhitzt und weitere 8 Stunden bei dieser Temperatur gerührt. Nach dem Abkühlen wird die Suspension auf ein Sieb gegeben. Das aminomethylierten Perlpolymerisat wird mit voll entsalztem Wasser gewaschen.

Volumenausbeute : 710 ml

HCl - Zahl: 1,54 mol/ Liter Harz

## Patentansprüche

1. Verfahren zur Herstellung von aminomethylierten Perlpolymerisaten, **dadurch gekennzeichnet, dass**

   a) Monomertröpfchen aus einem Gemisch enthaltend mindestens eine monovinylaromatische Verbindung, mindestens eine polyvinylaromatische Verbindung, mindestens einen Initiator zu einem Perlpolymerisat umgesetzt werden und
   b) das Perlpolymerisat aus Schritt a) mit Verbindungen der Formel (I) oder deren Salze

   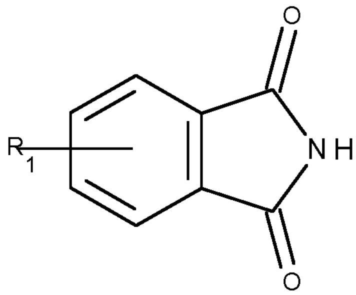 (I)

   wobei $R_1$ = $C_1$-$C_3$-Alkyl oder H bedeutet und Verbindungen der Formel (II)

   $$HO-[CH_2-O]_n-H \quad (II)$$

   wobei n = 2 bis 100 ist,
   in Gegenwart von aliphatischen, gesättigten oder ungesättigten Carbonsäureanhydriden oder in Gegenwart von Gemischen von aliphatischen, gesättigten oder ungesättigten Carbonsäureanhydride und zumindest einer aliphatischen, gesättigten oder ungesättigten Carbonsäure und
   in Gegenwart von zumindest einem Friedel-Crafts Katalysator
   zu einem phthalimidomethyliertem Perlpolymerisat umgesetzt wird und die Menge der eingesetzten Verbindungen der Formel (I) und der Formel (II), des Perlpolymerisates, der aliphatischen, gesättigten oder ungesättigten Carbonsäureanhydriden, Friedel-Crafts Katalysatoren und gegebenenfalls Carbonsäuren zusammen in der Reaktionsmischung größer sind als 80 Gew.-% bezogen auf die Gesamtmenge der Reaktionsmischung und
   c) das phthalimidomethylierte Perlpolymerisat zu einem aminomethylierten Perlpolymerisat hydrolisiert wird.

2. Verfahren gemäß Anspruch 1, **dadurch gekennzeichnet, dass** in Verfahrensschritt a) als monovinylaromatische Verbindung Styrol, α-Methylstyrol, Vinyltoluol, Ethylstyrol, t-Butylstyrol, Chlorstyrol, Bromstyrol, Chlormethylstyrol oder Vinylnaphthalin oder Mischungen dieser Verbindungen eingesetzt werden.

3. Verfahren gemäß Anspruch 1 oder 2, **dadurch gekennzeichnet, dass** in Verfahrensschritt a) als polyvinylaromatische Verbindung Divinylbenzol, Divinyltoluol oder Trivinylbenzol oder Mischungen dieser Verbindungen eingesetzt werden.

4. Verfahren gemäß mindestens einem der Ansprüche 1 bis 3, **dadurch gekennzeichnet, dass** als eine monovinylaromatische Verbindung Styrol und als polyvinylaromatische Verbindung Divinylbenzol und eingesetzt werden.

5. Verfahren gemäß mindestens einem der Ansprüche 1 bis 4, **dadurch gekennzeichnet, dass** $R_1$ = H in der Verbindung der Formel (I) ist.

6. Verfahren gemäß mindestens einem der Ansprüche 1 bis 5, **dadurch gekennzeichnet, dass** n = 8 bis 30 in der Verbindung der Formel (II) ist.

7. Verfahren gemäß mindestens einem der Ansprüche 1 bis 6, **dadurch gekennzeichnet, dass** als Friedel-Crafts Katalysatoren in Schritt b) ein Gemisch aus Eisen(III)chlorid und Schwefelsäure eingesetzt wird.

8. Verfahren gemäß mindestens einem der Ansprüche 1 bis 7, **dadurch gekennzeichnet, dass** in Schritt b) als Carbonsäureanhydride und Carbonsäuren ein Gemisch aus Essigsäureanhydrid und Essigsäure eingesetzt wird.

9. Verfahren gemäß Anspruch 8, **dadurch gekennzeichnet, dass** das Verhältnis Essigsäureanhydrid zu Essigsäure zwischen 3:1 bis 10 : 1 liegt.

10. Verfahren gemäß mindestens einem der Ansprüche 1 bis 9, **dadurch gekennzeichnet, dass** der Friedel-Crafts Katalysator in Schritt b) in einer Menge von 1 bis 5 mol pro Mol Verbindungen der Formel (I) eingesetzt werden.

11. Verfahren gemäß mindestens einem der Ansprüche 1 bis 10, **dadurch gekennzeichnet, dass** die Verbindungen der Formel (I) in Verfahrensschritt b) in einer Menge von 0,001 bis 0,05 mol pro Gramm Perlpolymerisat eingesetzt werden.

12. Verfahren gemäß mindestens einem der Ansprüche 1 bis 11, **dadurch gekennzeichnet, dass** die Carbonsäureanhydride in einer Menge von 1,5 bis 4 mol pro Mol Verbindungen der Formel (I) in Verfahrensschritt b) eingesetzt werden.

13. Verfahren gemäß mindestens einem der Ansprüche 1 bis 12, **dadurch gekennzeichnet, dass** die Verbindungen der Formel (I) in einer Menge von 0,01 bis 0,05 mol pro Gramm Verbindungen der Formel (II) in Verfahrensschritt b) eingesetzt werden.

14. Verfahren gemäß mindestens einem der Ansprüche 1 bis 13, **dadurch gekennzeichnet**, das in Schritt a) ein Porogen eingesetzt wird.

15. Verfahren gemäß mindestens einem der Ansprüche 1 bis 14, **dadurch gekennzeichnet, dass** in Verfahrensschritt b) die eingesetzten Mengen der Verbindungen der Formel (I), der Verbindungen der Formel (II), des Perlpolymerisats, der aliphatischen, gesättigten oder ungesättigten Carbonsäureanhydriden Friedel-Crafts Katalysatoren und gegebenenfalls Carbonsäuren zusammen in einer Menge größer als 95 Gew.-% in der Reaktionsmischung bezogen auf die Gesamtmenge der Reaktionsmischung eingesetzt werden.

## Claims

1. Process for preparing aminomethylated bead polymers, **characterized in that**

   a) monomer droplets composed of a mixture comprising at least one monovinylaromatic compound, at least one polyvinylaromatic compound and at least one initiator are converted to a bead polymer and
   b) the bead polymer from step a) is reacted with compounds of the formula (I) or salts thereof

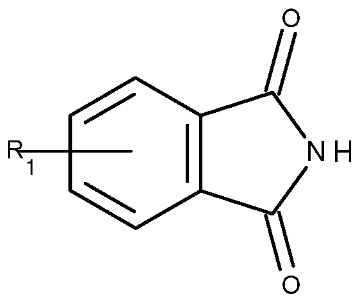

(I)

where $R_1$ = $C_1$-$C_3$-alkyl or H and compounds of the formula (II)

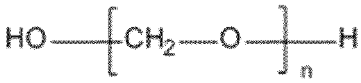

(II)

where n = 2 to 100,
in the presence of aliphatic saturated or unsaturated carboxylic anhydrides or in the presence of mixtures of aliphatic saturated or unsaturated carboxylic anhydrides and at least one aliphatic saturated or unsaturated carboxylic acid, and
in the presence of at least one Friedel-Crafts catalyst,
to give a phthalimidomethylated bead polymer, and the amount of the compounds of the formula (I) and of the formula (II) used, the bead polymer, and the aliphatic saturated or unsaturated carboxylic anhydrides, Friedel-Crafts catalysts and any carboxylic acids together in the reaction mixture is greater than 80% by weight based on the total amount of the reaction mixture, and
c) the phthalimidomethylated bead polymer is hydrolysed to give an aminomethylated bead polymer.

2. Process according to Claim 1, **characterized in that**, in process step a), monovinylaromatic compounds used are styrene, α-methylstyrene, vinyltoluene, ethylstyrene, t-butylstyrene, chlorostyrene, bromostyrene, chloromethylstyrene or vinylnaphthalene or mixtures of these compounds.

3. Process according to Claim 1 or 2, **characterized in that**, in process step a), polyvinylaromatic compounds used are divinylbenzene, divinyltoluene or trivinylbenzene or mixtures of these compounds.

4. Process according to at least one of Claims 1 to 3, **characterized in that** a monovinylaromatic compound used is styrene and a polyvinylaromatic compound used is divinylbenzene.

5. Process according to at least one of Claims 1 to 4, **characterized in that** $R_1$ = H in the compound of the formula (I).

6. Process according to at least one of Claims 1 to 5, **characterized in that** n = 8 to 30 in the compound of the formula (II).

7. Process according to at least one of Claims 1 to 6, **characterized in that** the Friedel-Crafts catalysts used in step b) are a mixture of iron(III) chloride and sulphuric acid.

8. Process according to at least one of Claims 1 to 7, **characterized in that** the carboxylic anhydrides and carboxylic acids used in step b) are a mixture of acetic anhydride and acetic acid.

9. Process according to Claim 8, **characterized in that** the ratio of acetic anhydride to acetic acid is between 3:1 and 10:1.

10. Process according to at least one of Claims 1 to 9, **characterized in that** the Friedel-Crafts catalyst is used in step b) in an amount of 1 to 5 mol per mole of compounds of the formula (I).

11. Process according to at least one of Claims 1 to 10, **characterized in that** the compounds of the formula (I) are used in process step b) in an amount of 0.001 to 0.05 mol per gram of bead polymer.

12. Process according to at least one of Claims 1 to 11, **characterized in that** the carboxylic anhydrides are used in

an amount of 1.5 to 4 mol per mole of compounds of the formula (I) in process step b).

**13.** Process according to at least one of Claims 1 to 12, **characterized in that** the compounds of the formula (I) are used in an amount of 0.01 to 0.05 mol per gram of compounds of the formula (II) in process step b) .

**14.** Process according to at least one of Claims 1 to 13, **characterized in that** a porogen is used in step a).

**15.** Process according to at least one of Claims 1 to 14, **characterized in that**, in process step b), the amounts of the compounds of the formula (I), the compounds of the formula (II), the bead polymer, the aliphatic saturated or unsaturated carboxylic anhydrides, Friedel-Crafts catalysts and any carboxylic acids used together are used in an amount greater than 95% by weight in the reaction mixture, based on the total amount of the reaction mixture.

**Revendications**

**1.** Procédé de fabrication de polymères en perles aminométhylés, **caractérisé en ce que**

a) des gouttelettes de monomères constituées par un mélange contenant au moins un composé monovinylaromatique, au moins un composé polyvinylaromatique, au moins un initiateur sont transformées en un polymère en perles, et
b) le polymère en perles de l'étape a) est mis en réaction avec des composés de la formule (I) ou leurs sels

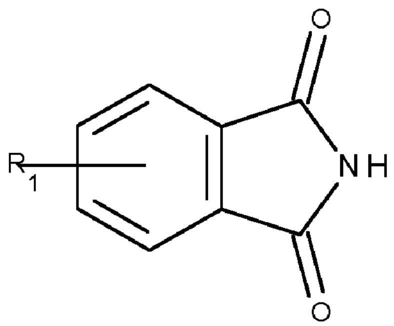

(I)

dans laquelle $R_1$ = alkyle en $C_1$-$C_3$ ou H, et des composés de la formule (II)

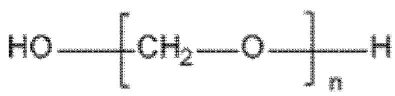

(II)

dans laquelle n = 2 à 100,
en présence d'anhydrides d'acides carboxyliques aliphatiques, saturés ou insaturés, ou en présence de mélanges d'anhydrides d'acides carboxyliques aliphatiques, saturés ou insaturés, et d'au moins un acide carboxylique aliphatique, saturé ou insaturé, et
en présence d'au moins un catalyseur de Friedel-Crafts,
pour former un polymère en perles phtalimidométhylé, et les quantités des composés utilisés de la formule (I) et de la formule (II), du polymère en perles, des anhydrides d'acides carboxyliques aliphatiques, saturés ou insaturés, des catalyseurs de Friedel-Crafts et éventuellement des acides carboxyliques ensemble dans le mélange réactionnel sont supérieures à 80 % en poids, par rapport à la quantité totale du mélange réactionnel,
et c) le polymère en perles phtalimidométhylé est hydrolysé en un polymère en perles aminométhylé.

**2.** Procédé selon la revendication 1, **caractérisé en ce que**, dans l'étape de procédé a), du styrène, de l'α-méthylstyrène, du vinyltoluène, de l'éthylstyrène, du t-butylstyrène, du chlorostyrène, du bromostyrène, du chlorométhylstyrène ou de la vinylnaphtaline ou des mélanges de ces composés sont utilisés en tant que composé monovinylaromatique.

**3.** Procédé selon la revendication 1 ou 2, **caractérisé en ce que**, dans l'étape de procédé a), du divinylbenzène, du divinyltoluène ou du trivinylbenzène ou des mélanges de ces composés sont utilisés en tant que composé polyvinylaromatique.

4. Procédé selon au moins l'une quelconque des revendications 1 à 3, **caractérisé en ce que** du styrène est utilisé en tant que composé monovinylaromatique et du divinylbenzène est utilisé en tant que composé polyvinylaromatique.

5. Procédé selon au moins l'une quelconque des revendications 1 à 4, **caractérisé en ce que** $R_1$ = H dans le composé de la formule (I).

6. Procédé selon au moins l'une quelconque des revendications 1 à 5, **caractérisé en ce que** n = 8 à 30 dans le composé de la formule (II).

7. Procédé selon au moins l'une quelconque des revendications 1 à 6, **caractérisé en ce qu'**un mélange de chlorure de fer (III) et d'acide sulfurique est utilisé en tant que catalyseur de Friedel-Crafts dans l'étape b).

8. Procédé selon au moins l'une quelconque des revendications 1 à 7, **caractérisé en ce que**, dans l'étape b), un mélange d'anhydride d'acide acétique et d'acide acétique est utilisé en tant qu'anhydrides d'acides carboxyliques et acides carboxyliques.

9. Procédé selon la revendication 8, **caractérisé en ce que** le rapport entre l'anhydride d'acide acétique et l'acide acétique est compris entre 3:1 et 10:1.

10. Procédé selon au moins l'une quelconque des revendications 1 à 9, **caractérisé en ce que** le catalyseur de Friedel-Crafts est utilisé dans l'étape b) en une quantité de 1 à 5 moles par mole de composés de la formule (I).

11. Procédé selon au moins l'une quelconque des revendications 1 à 10, **caractérisé en ce que** les composés de la formule (I) sont utilisés dans l'étape de procédé b) en une quantité de 0,001 à 0,05 mole par gramme de polymère en perles.

12. Procédé selon au moins l'une quelconque des revendications 1 à 11, **caractérisé en ce que** les anhydrides d'acides carboxyliques sont utilisés en une quantité de 1,5 à 4 moles par mole de composés de la formule (I) dans l'étape de procédé b).

13. Procédé selon au moins l'une quelconque des revendications 1 à 12, **caractérisé en ce que** les composés de la formule (I) sont utilisés en une quantité de 0,01 à 0,05 mole par gramme de composés de la formule (II) dans l'étape de procédé b).

14. Procédé selon au moins l'une quelconque des revendications 1 à 13, **caractérisé en ce qu'**un porogène est utilisé dans l'étape a).

15. Procédé selon au moins l'une quelconque des revendications 1 à 14, **caractérisé en ce que**, dans l'étape de procédé b), les quantités utilisées des composés de la formule (I), des composés de la formule (II), du polymère en perles, des anhydrides d'acides carboxyliques aliphatiques, saturés ou insaturés, des catalyseurs de Friedel-Crafts et éventuellement des acides carboxyliques sont utilisées ensemble en une quantité supérieure à 95 % en poids dans le mélange réactionnel par rapport à la quantité totale du mélange réactionnel.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4232125 A
- EP 2014067109 W
- US 3989650 A
- EP 1078688 A
- US 4952608 A
- US 4382124 A
- EP 0046535 A
- US 4444961 A
- US 4419245 A
- WO 9312167 A